# EUROPÄISCHE PATENTSCHRIFT

(11) **EP 1 475 292 B1**
(45) Veröffentlichungstag und Bekanntmachung des Hinweises auf die Patenterteilung: **29.12.2004**
(21) Anmeldenummer: 03291062.2
(22) Anmeldetag: 28.04.2003
(51) Int. Cl.: B61L 25/02

(54) **Verfahren und Vorrichtung zur Pulsfolgefehlererkennung**
Method and apparatus for pulse train error detection
Méthode et dispositif pour la détection des erreurs dans la succession d'impulsion

(43) Veröffentlichungstag der Anmeldung: 10.11.2004
(73) Patentinhaber: ALCATEL, 75008 Paris (FR)
(72) Erfinder: Gebert, Thomas, 74626 Bretzfeld (DE); Lauterberg, Veit Dr., 70736 Fellbach (DE)
(74) Vertreter: Menzietti, Domenico, Dipl.-Ing

(56) Entgegenhaltungen:
- DE-A- 10 139 102
- US-A- 4 969 695
- US-A1- 2001 032 500

## Beschreibung

Die Erfindung betrifft ein Verfahren zur Pulsfolgefehlererkennung. Das Verfahren ist insbesondere geeignet zur Pulsfolgefehlererkennung in Zugsicherungssystemen und speziell für (Weg-)Impulsgeber in einer SDMU (Geschwindigkeits- und wegmeßeinheit).

Zugsicherungssysteme bilden einen wesentlichen Bestandteil der Eisenbahnsicherungstechnik. Moderne Zugsicherungssysteme erlauben dem Triebfahrzeugführer die erweiterte Vorausschau (elektrische Sicht) über eine große Distanz der vor ihm liegenden Strecke und sind somit Voraussetzung für den Hochgeschwindigkeitsverkehr. Die Zugsicherungssysteme und die beteiligten Komponenten übernehmen dabei Sicherheitsverantwortung. Eine wesentliche Komponente ist dabei die SDMU (Geschwindigkeits- und wegmeßeinheit).

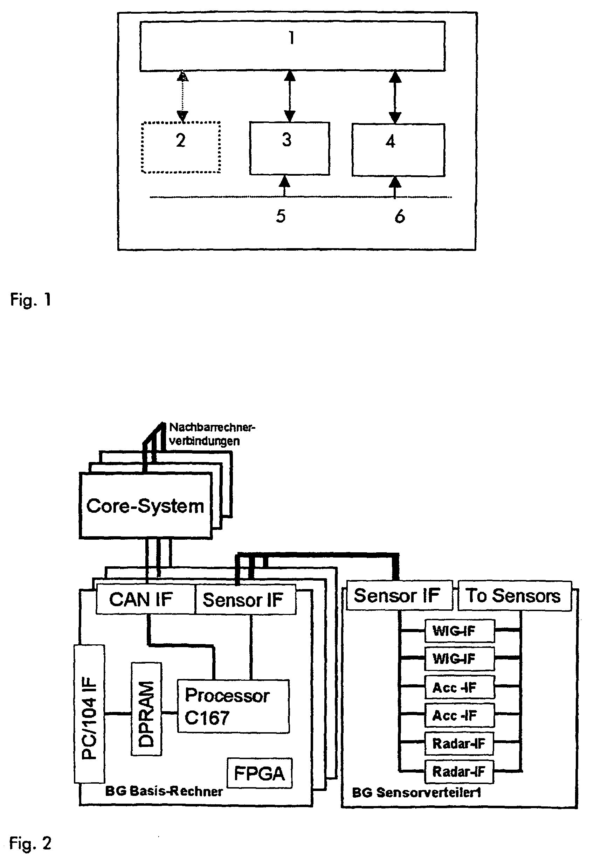

Fig. 1 zeigt die Einbindung einer SDMU 3 in den modularen Aufbau einer Zugsicherung. Auf dem Triebfahrzeug eines Zuges (ICE, TGV, S-Bahn, U-Bahn, usw.) sind verschiedene on-board Einheiten angeordnet. In einer ersten Einheit 1 werden die zentralen Zugsicherungsfunktionen bearbeitet. Einheit 1 hat mehrere Schnittstellen zu anderen modular aufgebauten Einheiten, darunter die SDMU 3, einer Einheit 4 zur Ortungsreferenz und anderen Komponenten 2. SDMU 3 und Einheit 4 haben zudem jeweils ein oder mehrere Schnittstellen zu entlang den Schienen angeordneten Referenzpunkten. Für die Ortungsreferenz sind dies abhängig von der Systemarchitektur im Falle von LZB (Linienzugbeeinflussung) z.B. Kreuzungsstellen und im Falle von ETCS (European Train Control System) Balisen.

Die Aufgabe der SDMU besteht in der relativen Wegmessung (Feinortung) zur jeweils gültigen Ortsreferenz und der Geschwindigkeitsmessung. Diese Daten müssen von der SDMU sicher ermittelt werden. Die Sicherheit der Weg- und Geschwindigkeitsinformation wird durch Angabe jeweils eines Vertrauensintervalls um den Nominalwert (Schätzwert) für den Weg und die Geschwindigkeit erreicht; der wirkliche Wert (Ist- Wert) muss mit definiert hoher Wahrscheinlichkeit innerhalb dieses Intervalls liegen. Weiter hat die SDMU die Aufgabe der Beschleunigungsermittlung, der sicheren relativen Fahrtrichtungserkennung und der sicheren Stillstandsermittlung.

Fig. 2 zeigt eine Übersicht über die Hardware-Komponenten einer SDMU.

Die SDMU beinhaltet 3 parallele, unabhängige SDMU-Rechner (Basisrechner) zur Vorverarbeitung und einen übergeordneten, sicheren Rechner mit Voter. Als sicherer Rechner wird das Core-System eingesetzt. Als Sensoren können Dopplerradar (Radar), Wegimpulsgeber (WIG) und Beschleunigungsmesser (Acc) eingesetzt werden. Für zukünftige Anwendungen kann ebenso GPS, eine Inertialplattform, etc. eingesetzt werden.

Alle SDMU-Rechner greifen über die Baugruppe (BG) Sensorverteiler auf die Sensordaten derselben Sensoren zu und ermitteln daraus unabhängig von den anderen SDMU-Rechnern die Weg- und Geschwindigkeitsinformation und das Vertrauensintervall für Weg und Geschwindigkeit. Die SDMU-Rechner haben keinen Datenaustausch untereinander. Die Weg- und Geschwindigkeitsinformation und die Vertrauensintervalle für Weg und Geschwindigkeit werden 3-kanalig an den sicheren Rechner (Core-System) weitergegeben.

Die Baugruppe (BG) Basis-Rechner ist im Europakartenformat aufgebaut und besitzt ein oder mehrere Schnittstellen (IF) zum Sensorverteiler. Sie sammelt die Sensorrohdaten, berechnet je nach Ausführung der SDMU die Odometriedaten und kommuniziert mit dem sicheren Fahrzeugrechner. Der Basis-Rechner ist für die Bearbeitung schneller Ein-/Ausgabe-Operationen optimiert. Er beinhaltet dazu z.B. einen Prozessor (Processor C167), einen Speicher (DPRAM=Dual Port Programmable Random Access Memory), ein FPGA (=Free Programmable Gate Array) sowie eine Schnittstelle (CAN IF) zum Core-System und gegebenenfalls ein oder mehr weitere Schnittstellen (PC/104 IF) zu Personalcomputern, etc.

Es sind ein oder zwei Sensorverteilerbaugruppen vorgesehen, die im Europakartenformat aufgebaut sind, mit Zuführung der Signale von den Sensoren über das Backpanel. Die Sensorsignale werden abhängig vom Sensortyp auf einen einheitlichen Pegel umgesetzt. Damit ist gewährleistet, dass Änderungen in den Sensoren immer nur auf die Sensorverteilerbaugruppen begrenzt bleiben und keine Auswirkungen auf den Basis-Rechner haben.

Ausgangssignale von Impulsgebern mit zwei Systemen können fehlerbehaftet sein.

Aus DE 101 39 102 A 1 ist ein Verfahren zur Ueberwachung der Funktionsfaehigkeit einer Fahrzeugbremse bekannt, bei dem die Funktionsfaehigkeit auf der Grundlage einer Raddrehzahldifferenz ueberwacht wird. Waehrend eines Bremsvorgangs wird die Raddrehzahl eines der zu ueberwachenden Fahrzeugbremse zugeordneten Rades gemessen und mit einer an einem anderen gebremsten Rad orientierten Referenzdrehzahl verglichen. Die Drehzahldifferenz zwischen der gemessenen Raddrehzahl und der Referenzdrehzahl wird dann als Kriterium zur Beurteilung der Funktionsfaehigkeit der Fahrzeugbremse verwendet.

Aufgabe der Erfindung ist es, ein Verfahren zur Pulsfolgefehlererkennung bereitzustellen, welche Fehler in den Impulsgebern offenbaren. Gelöst wird die Aufgabe durch ein Verfahren gemäß Patentanspruch 1.

Das erfindungsgemäße Verfahren zur Pulsfolgefehlererkennung für einen Impulsgeber mit zwei oder mehr Systemen, z.B. einen Wegimpulsgeber, ist dadurch gekennzeichnet, dass für jeweils zwei Systeme die Anzahl der auftretenden Flanken von Impulsen des einen Systems ohne zwischenzeitliches Auftreten von einer Flanke der Impulse des anderen Systems ermittelt wird, und dass eine Auswertung der ermittelten Anzahl von Flanken in Abhängigkeit von der Geschwindigkeit eines Zuges oder der Drehzahl des Impulsgebers erfolgt, wobei unterhalb einer bestimmten Grenzgeschwindigkeit bzw. einer bestimmten Drehzahl bei Überschreiten der ermittelten Anzahl von Flanken um einen ersten Wert ein Pulsfolgefehler registriert wird und oberhalb der bestimmten Grenzgeschwindigkeit bzw. der bestimmten Drehzahl bei Überschreiten der ermittelten Anzahl von Flanken um einen zweiten Wert ein Pulsfolgefehler registriert wird, und wobei der erster Wert höher ist als der zweite.

Die Implementierung der Ermittlung und Auswertung ist durch Hardware, Software oder Hardware + Software möglich. Der erste Wert ist z.B. vier und der zweite Wert gleich eins. Die Grenzgeschwindigkeit ist z.B. 1 km/h. Anstelle von 1 km/h kann auch jeder beliebige Wert größer 0 km/h als Grenzgeschwindigkeit verwendet werden, z.B. 2, 3 oder 4 km/h. Anstelle der Registrierung der Pulsfolgefehler in Abhängigkeit von einer Grenzgeschwindigkeit kann auch eine Implementierung erfolgen bei der die Registrierung in Abhängigkeit von zwei Grenzgeschwindigkeiten ermittelt wird. So wird bei einer aktuellen Geschwindigkeit unterhalb der ersten, niedrigeren Grenzgeschwindigkeit, z.B. ein Wert zwischen 0 und 1 km/h bei Überschreiten der ermittelten Anzahl von Flanken um einen ersten Wert ein Pulsfolgefehler registriert wird, bei einer aktuellen Geschwindigkeit oberhalb der ersten, aber unterhalb der zweiten, höheren Grenzgeschwindigkeit, z.B. ein Wert zwischen 1 und 5 km/h bei Überschreiten der ermittelten Anzahl von Flanken um einen zweiten Wert ein Pulsfolgefehler registriert wird, und bei einer aktuellen Geschwindigkeit oberhalb der zweiten Grenzgeschwindigkeit bei Überschreiten der ermittelten Anzahl um einen dritten Wert ein Pulsfolgefehler registriert wird, wobei gilt: erster Wert größer zweiter Wert größer dritter Wert.

In einer besonderen Ausgestaltung des Verfahren erfolgt für jeweils zwei Systeme die Ermittlung der Anzahl mittels zweier in Software oder Hardware ausgeführte Zähler, wobei der eine Zähler die Flanken der Impulse des einen Systems zählt und bei jeder Flanke der Impulse des anderen Systems zurückgesetzt wird und der andere Zähler die Flanken der Impulse des anderen Systems zählt und bei jeder Flanke der Impulse des einen Systems zurückgesetzt wird.

Ein Zähler ist beispielsweise als Vorwärts- oder Rückwärts-Zähler ausgeführt.

Ein zum erfindungsgemäßen Verfahren zugehöriges erfindungsgemäßes Computerprogrammprodukt zur Pulsfolgefehlererkennung für einen Impulsgeber mit zwei oder mehr Systemen beinhaltet Anweisungen zur Ermittlung einer Anzahl von auftretenden Flanken von Impulsen eines ersten Systems ohne zwischenzeitliches Auftreten von einer Flanke der Impulse eines zweiten Systems und zur Auswertung der ermittelten Anzahl von Flanken in Abhängigkeit von der Geschwindigkeit eines Zuges oder der Drehzahl des Impulsgebers, wobei unterhalb einer bestimmten Grenzgeschwindigkeit bzw. einer bestimmten Drehzahl bei Überschreiten der ermittelten Anzahl von Flanken um einen ersten Wert ein Pulsfolgefehler registriert wird und oberhalb der bestimmten Grenzgeschwindigkeit bzw. der bestimmten Drehzahl bei Überschreiten der ermittelten Anzahl von Flanken um einen zweiten Wert ein Pulsfolgefehler registriert wird, und wobei der erster Wert höher ist als der zweite.

Die Anweisungen sind beispielsweise in der Programmiersprache C++ geschrieben. Eine erste Subroutine beinhaltet z.B. einen Vergleich der aktuellen Geschwindigkeit mit der Grenzgeschwindigkeit und einem anschließenden Springen in eine zweite und dritte Subroutine im Falle, dass die aktuelle Geschwindigkeit unterhalb der Grenzgeschwindigkeit liegt, und einem Springen in eine vierte und fünfte Subroutine im Falle, dass die aktuelle Geschwindigkeit oberhalb der Grenzgeschwindigkeit liegt oder gleich der Grenzgeschwindigkeit ist. Eine zweite Subroutine beinhaltet z.B. eine Zählfunktion für das Auftreten der Flanken des einen Systems mit anschließendem Vergleich mit dem ersten Wert und einer Alarmmeldung im Falle des Überschreitens des Wertes, wobei bei zwischenzeitlichem Auftreten einer Flanke des anderen Systems die nachfolgende Zählung für das eine System wieder bei Null startet (Resetfunktion). Eine dritte Subroutine beinhaltet z.B. eine Zählfunktion für das Auftreten der Flanken des anderen Systems mit anschließendem Vergleich mit dem ersten Wert und einer Alarmmeldung im Falle des Überschreitens des Wertes, wobei bei zwischenzeitlichem Auftreten einer Flanke des einen Systems die nachfolgende Zählung für das andere System wieder bei Null startet (Resetfunktion). Eine vierte Subroutine beinhaltet z.B. eine Zählfunktion für das Auftreten der Flanken des einen Systems mit anschließendem Vergleich mit dem zweiten Wert und einer Alarmmeldung im Falle des Überschreitens des Wertes, wobei bei zwischenzeitlichem Auftreten einer Flanke des anderen Systems die nachfolgende Zählung für das eine System wieder bei Null startet (Resetfunktion). Eine fünfte Subroutine beinhaltet z.B. eine Zählfunktion für das Auftreten der Flanken des anderen Systems mit anschließendem Vergleich mit dem zweiten Wert und einer Alarmmeldung im Falle des Überschreitens des Wertes, wobei bei zwischenzeitlichem Auftreten einer Flanke des einen Systems die nachfolgende Zählung für das andere System wieder bei Null startet (Resetfunktion).

Die Erfindung kann durch ein FPGA mit einem speziellen, erfindungsgemäßen Programm zur Pulsfolgefehlererkennung für einen Impulsgeber mit zwei oder mehr Systemen realisiert sein, wobei das Programm Anweisungen beinhaltet zur Ermittlung einer Anzahl von auftretenden Flanken von Impulsen eines ersten Systems ohne zwischenzeitliches Auftreten von einer Flanke der Impulse eines zweiten Systems und zur Auswertung der ermittelten Anzahl in Abhängigkeit von der Geschwindigkeit eines Zuges oder der Drehzahl des Impulsgebers, wobei unterhalb einer bestimmten Grenzgeschwindigkeit bzw. einer bestimmten Drehzahl bei Überschreiten der ermittelten Anzahl von Flanken um einen ersten Wert ein Pulsfolgefehler registriert wird und oberhalb der bestimmten Grenzgeschwindigkeit bzw. der bestimmten Drehzahl bei Überschreiten der ermittelten Anzahl von Flanken um einen zweiten Wert ein Pulsfolgefehler registriert wird, und wobei der erster Wert höher ist als der zweite.

Welche Funktionen (Zählen der Flanken, Rücksetzen der Zähler, Vergleich mit bestimmten Werten, Ermittlung der Ist-Geschwindigkeit, Vergleich von Istgeschwindigkeit mit Grenzgeschwindigkeit) im FPGA und welche durch ein Computerprogrammprodukt realisiert sind ist für die Implementierung der Erfindung unerheblich. Insofern ist auch eine Kombination aus beiden möglich. Die Erfindung kann infolgedessen auch aus einer Kombination aus Hard- und Software realisiert sein.

Die Erfindung kann durch eine SDMU mit mindestens zwei Basisrechnern realisiert sein, wobei jeder Basisrechner mindestens einen Prozessor und/oder ein FPGA beinhaltet und jedes FPGA und/oder jeder Prozessor mit dem speziellen, erfindungsgemäßen Computerprogramm geladen ist. Das Computerprogrammprodukt kann alternativ auf einem Datenträger gespeichert sein, z.B. CD-ROM.

Die Erfindung kann ferner durch eine erfindungsgemäße Vorrichtung zur Pulsfolgefehlererkennung für einen Impulsgeber mit zwei oder mehr Systemen realisiert sein, die dadurch gekennzeichnet ist, dass mindestens zwei Zähler und eine Auswerteschaltung vorgesehen sind, dass jeder Zähler einen Dateneingang, einen Reseteingang und einen Datenausgang aufweist und mit dem Datenausgang mit der Auswerteschaltung verbunden ist, dass dem Dateneingang des ersten Zählers die Impulse des ersten Systems zugeführt sind, so dass der erste Zähler bei jeder Flanke der Impulse des ersten Systems in Einerschritten hoch zählt, dass dem Reseteingang des ersten Zählers die Impulse des zweiten Systems zugeführt sind, so dass der erste Zähler bei jeder Flanke der Impulse des zweiten Systems zurückgesetzt wird, dass dem Dateneingang des zweiten Zählers die Impulse des zweiten Systems zugeführt sind, so dass der zweite Zähler bei jeder Flanke der Impulse des zweiten Systems in Einerschritten hoch zählt, dass dem Reseteingang des zweiten Zählers die Impulse des ersten Systems zugeführt sind, so dass der zweite Zähler bei jeder Flanke der Impulse des ersten Systems zurückgesetzt wird, dass die Auswerteschaltung derart ausgestaltet ist, die Datenausgangssignale der Zähler in Abhängigkeit von der Geschwindigkeit oder der Drehzahl eines Zuges unterschiedlich auszuwerten, dass die Auswerteschaltung die Datenausgangssignale jedes Zählers unterhalb einer bestimmten Grenzgeschwindigkeit bzw. einer bestimmten Drehzahl mit einem ersten Wert vergleicht und bei jedem Überschreiten des ersten Wertes einen Pulsfolgefehler registriert, und dass die Auswerteschaltung die Datenausgangssignale jedes Zählers oberhalb der bestimmten Grenzgeschwindigkeit bzw. der bestimmten Drehzahl mit einem zweiten Wert vergleicht und bei jedem Überschreiten des zweiten Wertes einen Pulsfolgefehler registriert, wobei der erster Wert höher ist als der zweite.

In einer besonderen Ausgestaltung der Vorrichtung ist der erste Wert gleich vier und der zweite Wert gleich eins ist.

Die Zähler sind z.B. in Software oder Hardware realisiert. Die Auswerteschaltung ist z.B. in Software und/oder Hardware realisiert. Sie beinhaltet z.B. einen Prozessor oder einen Teil davon, z.B. einen Teil des bereits in einem Basisrechner einer SDMU vorhandenen Prozessors, zwei Vergleicher, z.B. Komparatoren, Schaltungslogik und/oder Softwareanweisungen.

In einer weiteren Ausgestaltung der Vorrichtung ist diese dadurch gekennzeichnet, dass ein dritter, ein vierter, ein fünfter und ein sechster Zähler vorgesehen sind, dass dem Dateneingang des dritten Zählers die Impulse des ersten Systems zugeführt sind, dass dem Reseteingang des dritten Zählers die Impulse des dritten Systems zugeführt sind, dass dem Dateneingang des vierten Zählers die Impulse des dritten Systems zugeführt sind, dass dem Reseteingang des vierten Zählers die Impulse des ersten Systems zugeführt sind, dass dem Dateneingang des fünften Zählers die Impulse des zweiten Systems zugeführt sind, dass dem Reseteingang des fünften Zählers die Impulse des dritten Systems zugeführt sind, dass dem Dateneingang des sechsten Zählers die Impulse des dritten Systems zugeführt sind, dass dem Reseteingang des sechsten Zählers die Impulse des zweiten Systems zugeführt sind, und dass die Auswerteschaltung zur Fehlerlokalisierung derart ausgestaltet ist, bei Auftreten von zwei Pulsfolgefehlern das an beiden Pulsfolgefehlern beteiligte, und damit fehlerhafte System zu ermitteln.

Die Fehlerlokalisierung wird in der Auswerteschaltung z.B. durch ein zusätzliches Softwareprogramm oder eine zusätzliche Schaltungslogik realisiert. In einer Tabelle ist z.B. abgespeichert, dass wenn eine Alarmmeldung in Zähler eins und fünf, aber nicht in drei auftritt System zwei fehlerhaft ist, dass wenn eine Alarmmeldung in Zähler eins und drei, aber nicht in fünf auftritt System eins fehlerhaft ist, dass wenn eine Alarmmeldung in Zähler drei und fünf, aber nicht in eins auftritt System drei fehlerhaft ist, usw. Durch Identifikation der alarmmeldenden Zähler und Zugriff auf die Tabelle kann das fehlerhafte System ermittelt werden.

In einer besonderen Ausgestaltung der Erfindung wird die Pulsfolgefehlererkennung zusätzlich zu einer anderen Fehlererkennung und/oder Überwachung für einen Impulsgeber durchgeführt, z.B. einer Gleichtaktfehlererkennung und/oder einer Pulsbreitenerkennung.

Vorteilhafte Ausgestaltungen der Erfindung sind den abhängigen Ansprüchen und der nachfolgenden Beschreibung zu entnehmen.

Im folgenden wird ein Ausführungsbeispiel der Erfindung unter Zuhilfenahme von Figuren erläutert. Es zeigen:
- Fig. 3: zwei Diagramme mit Amplituden der Signale von zwei Systemen eines Impulsgebers,
- Fig. 4: ein Diagramm mit Amplituden der Signale von zwei Systemen eines Impulsgebers und einen Pulsfolgefehler, und
- Fig. 5: ein Diagramm mit Amplituden der Signale von zwei Systemen eines Impulsgebers und einen weiteren Pulsfolgefehler.

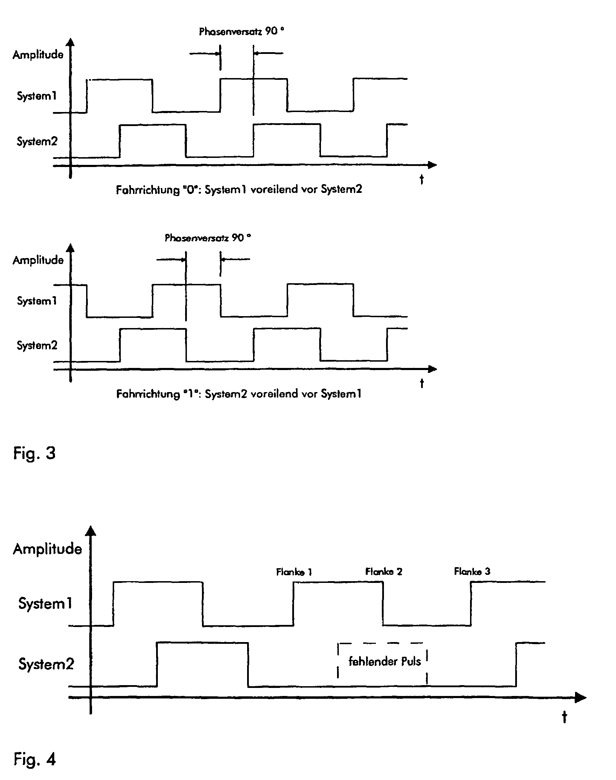

Das Ausführungsbeispiel wird nun zunächst anhand von Fig. 3 erläutert. Fig. 3 zeigt zwei Diagramme mit Amplituden der Signale von zwei Systemen eines Impulsgebers.

Die Erfindung ist auf alle Impulsgeber, die zwei oder mehr Systeme/Spuren besitzen, anwendbar. Der Impulsgebertyp (z. B. Optischer Wegimpulsgeber, Hallgeber, etc.) ist dafür unerheblich.

Bei Impulsgebern mit mehr als zwei Systemen kann das Verfahren auf ein oder mehrere System-Paare angewendet werden.

Zur Veranschaulichung des Prinzips wird im folgenden immer von einem Impulsgeber mit zwei Systemen mit identischer Impulszahl pro Umdrehung ausgegangen:
Zwischen den Systemen besteht immer ein fester erkennbarer Phasenversatz φ zwischen 0 ° und 180 °. Das zulässige Tastverhältnis T (Verhältnis High/Low) muss zwischen φ/(360°-φ) und (360°-φ)/φ liegen.

In Fig. 3 sind die Signale eines Impulsgebers mit zwei Systemen beispielhaft für eine konstante Geschwindigkeit eines Zuges und die beiden Fahrtrichtungen dargestellt. Im Beispiel ist φ = 90 ° und die Wegimpulse besitzen ein Tastverhältnis T = 1. Oben ist die Fahrtrichtung "0" und unten ist die Fahrtrichtung "1".

### Pulsfolgefehlererkennung:

### Definition eines Pulsfolgefehlers P_{FF}(F):

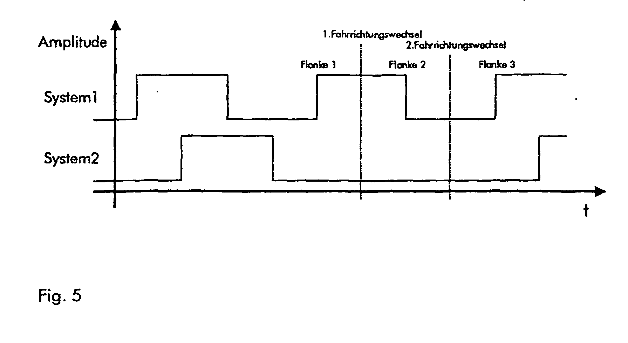

Ein Pulsfolgefehler P_{FF} (F) ist dann vorhanden, wenn zwischen zwei aufeinanderfolgenden Flanken eines Systems F Flanken mit F > 1 auf dem anderen System aufgetreten sind. Fig. 4 zeigt einen Pulsfolgefehler mit F = 3 Flanken. Zwischen zwei Flanken auf System 2 sind auf System 1 drei Flanken aufgetreten.
Bei der Betrachtung von 2 Systemen kann keine Aussage getroffen werden, welches der beiden Systeme defekt ist.

### Funktion der Pulsfolgeschaltung:

Die Pulsfolgeschaltung bestimmt fortlaufend F des Impulsgebers.
Bei jeder beliebigen Flanke auf einem System (z. B. System 1) wird ein Zähler zurückgesetzt, der solange alle Flanken auf dem jeweils anderen System (z. B. System 2) zählt, bis eine erneute Flanke auf dem ersten System (z. B. System 1) auftritt. Bei der Auswertung der Pulsfolge von Fig. 4 wird z. B. mit der fallenden Flanke von System 2 ein Zähler zurückgesetzt, der dann die Anzahl der Flanken F auf System 1 zählt. Für F > 1 auf System 1 ist ein Pulsfolgefehler aufgetreten, der dann signalisiert wird. Mit der steigenden Flanke auf System 2 wird der Zähler erneut zurückgesetzt und das Zählen der Flanken auf System 1 beginnt erneut.

Die Überwachung wird in gleicher Weise für System 2 durchgeführt, d. h. bei einer beliebigen Flanke auf System 1 wird ein Zähler zurückgesetzt, der die Anzahl der Flanken auf System 2 bis zur nächsten beliebigen Flanke auf System 1 zählt.
Die Pulsfolgeschaltung ist somit pro System-Paar doppelt vorhanden, da die Systeme gegenseitig überprüft werden. Die Pulsfolgeschaltung erkennt, wenn eines der beiden WIG-Systeme zu viele oder zu wenige Impulse im Vergleich zum anderen System erzeugt.

Die Pulsfolgeschaltung kann durch Hard- oder Software aufgebaut sein.

### Auswertung der Pulsfolgefehler:

Abhängig von der Geschwindigkeit des Zuges bzw. der Drehzahl des Impulsgebers wird die Anzahl der Flanken F zwischen zwei beliebigen Flanken auf dem jeweils anderen System unterschiedlich gewertet und daraus eine (Fehler) Reaktion abgeleitet.

### Diese flexible Auswertung ist im folgenden anhand eines Beispiels erklärt:

### Fahrt mit v < 1 km/h:

Beim Abbremsen oder Beschleunigen im Geschwindigkeitsbereich unter 1 km/h oder durch Rangierstöße kann es durch Ein- und Ausfedern der Puffer zu kurzen Vor- und Rückwärtsbewegungen (Fahrtrichtungswechsel) im Zentimeterbereich kommen. Um zu verhindern, dass sich dieses Szenario als Pulsfolgefehler auswirkt (wenn z. B. ein Rad so positioniert ist, dass das WIG-Ausgangssignal gerade kurz vor oder nach einer Flanke steht), wird z. B. zwischen den Zuständen 2 bzw. 5 Flanken zwischen zwei aufeinanderfolgenden Flanken (des anderen Systems) unterschieden. Unterhalb 1 km/h werden bis zu 4 Flanken zwischen zwei aufeinanderfolgenden Flanken des anderen Systems zugelassen, da es sich um Ein- bzw. Ausfedern der Puffer oder einen Fahrtrichtungswechsel handeln kann. Bei einem Fahrtrichtungswechsel treten immer 2 Flanken zwischen zwei aufeinanderfolgenden Flanken des anderen Systems auf. 5 Flanken werden nicht toleriert. In diesem Fall wird ein Defekt im Impulsgeber angenommen.

Fig. 5 zeigt Pulsfolgefehler P = 3 (System 1 bringt 3 Flanken zwischen zwei aufeinanderfolgenden Flanken auf System 2) durch 2 Fahrtrichtungswechsel in Folge.

### Fahrt mit v > = 1 km/h:

Bei Geschwindigkeiten v >= 1 km/h treten keine Rangierstöße bzw. Einund Ausfedern der Puffer oder Fahrtrichtungswechsel auf, so dass bereits 2 Flanken zwischen zwei aufeinanderfolgenden Flanken des anderen Systems einen Pulsfolgefehler und somit einen Defekt im Impulsgeber darstellen.

Diese Unterteilung in Arten von Fehlerreaktionen abhängig von der Geschwindigkeit/Drehzahl erlaubt eine Fehlerüberwachung bis zum Stillstand, wobei die Betriebszuverlässigkeit sehr hoch bleibt.
Bei älteren Systemen wurde, bedingt durch die Problematik von 2 auftretenden Flanken bei einem Fahrtrichtungswechsel, die Überwachung im unteren Geschwindigkeitsbereich abgeschaltet.
Oberhalb einer frei festlegbaren Grenzgeschwindigkeit (im Beispiel 1 km/h) wird auf Pulsfolgefehler wesentlich restriktiver reagiert und ein Pulsfolgefehler sofort offenbart.

### Fehleroffenbarung bei Impulsgebern mit mehr als 2 Systemen:

Bei Impulsgebern mit 3 oder mehr Systemen kann zusätzlich zur Pulsfolgefehlerüberwachung bei Pulsfolgefehlern eine Fehlerlokalisierung stattfinden.
Dazu werden jeweils zwei der drei Systeme mit zwei Pulsfolgefehlerschaltungen gegeneinander geprüft. Durch Auswertung der Information auf welchen Systemen Pulsfolgefehler aufgetreten sind, kann das defekte System ermittelt werden.

### Beispiel:

Es wird von einem Impulsgeber mit 3 Systemen ausgegangen:

Folgende Pulsfolgefehler werden erkannt:
- System 1 zu System 2 zeigt Pulsfolgefehler
- System 2 zu System 3 zeigt Pulsfolgefehler
- System 1 zu System 3 zeigt keinen Pulsfolgefehler

Das System welches zweimal an den Pulsfolgefehlern beteiligt ist, ist das defekte System. Daraus resultiert im Beispiel, dass Systeme 1 und 3 korrekt arbeiten und System 2 das defekte System ist.

## Patentansprüche

1. Verfahren zur Pulsfolgefehlererkennung für einen Impulsgeber mit zwei oder mehr Systemen, **dadurch gekennzeichnet, dass** für jeweils zwei Systeme die Anzahl der auftretenden Flanken von Impulsen des einen Systems bis zum Auftreten einer Flanke der Impulse des anderen Systems ermittelt wird, und dass eine Auswertung der ermittelten Anzahl von Flanken in Abhängigkeit von der Geschwindigkeit eines Zuges oder der Drehzahl des Impulsgebers erfolgt, wobei unterhalb einer bestimmten Grenzgeschwindigkeit bzw. einer bestimmten Drehzahl bei Überschreiten der ermittelten Anzahl von Flanken um einen ersten Wert ein Pulsfolgefehler registriert wird und oberhalb der bestimmten Grenzgeschwindigkeit bzw. der bestimmten Drehzahl bei Überschreiten der ermittelten Anzahl um einen zweiten Wert ein Pulsfolgefehler registriert wird, wobei der erste Wert höher ist als der zweite.

2. Verfahren gemäß Patentanspruch 1, **dadurch gekennzeichnet, dass** für jeweils zwei Systeme die Ermittlung der Anzahl mittels zweier in Software oder Hardware ausgeführte Zähler erfolgt, wobei der eine Zähler die Flanken der Impulse des einen Systems zählt und bei jeder Flanke der Impulse des anderen Systems zurückgesetzt wird und der andere Zähler die Flanken der Impulse des anderen Systems zählt und bei jeder Flanke der Impulse des einen Systems zurückgesetzt wird.

3. Frei programmierbares Gate Array oder Prozessor mit einem speziellen Programm zur Pulsfolgefehlererkennung für einen Impulsgeber mit zwei oder mehr Systemen, das Anweisungen beinhaltet zur Durchfuehrung des Verfahrens gemaess Patentanspruch 1.

4. Computerprogrammprodukt zur Pulsfolgefehlererkennung für einen Impulsgeber mit zwei oder mehr Systemen beinhaltend Anweisungen zur Durchfuehrung des Verfahrens gemaess Patentanspruch 1.

5. Geschwindigkeits- und wegmeßeinheit mit mindestens zwei Basisrechnern, wobei jeder Basisrechner mindestens einen Prozessor und/oder ein frei programmierbares Gate Array beinhaltet, **dadurch gekennzeichnet, dass** jedes frei programmierbare Gate Array und/oder jeder Prozessor mit einem speziellen Programm geladen ist, welches Anweisungen beinhaltet zur Durchfuehrung des Verfahrens gemaess Patentanspruch 1.

6. Vorrichtung zur Pulsfolgefehlererkennung für einen Impulsgeber mit zwei oder mehr Systemen, **dadurch gekennzeichnet, dass** mindestens zwei Zähler und eine Auswerteschaltung vorgesehen sind, dass jeder Zähler einen Dateneingang, einen Reseteingang und einen Datenausgang aufweist und mit dem Datenausgang mit der Auswerteschaltung verbunden ist, dass dem Dateneingang des ersten Zählers die Impulse des ersten Systems zugeführt sind, so dass der erste Zähler bei jeder Flanke der Impulse des ersten Systems in Einerschritten hoch zählt, dass dem Reseteingang des ersten Zählers die Impulse des zweiten Systems zugeführt sind, so dass der erste Zähler bei jeder Flanke der Impulse des zweiten Systems zurückgesetzt wird, dass dem Dateneingang des zweiten Zählers die Impulse des zweiten Systems zugeführt sind, so dass der zweite Zähler bei jeder Flanke der Impulse des zweiten Systems in Einerschritten hoch zählt, dass dem Reseteingang des zweiten Zählers die Impulse des ersten Systems zugeführt sind, so dass der zweite Zähler bei jeder Flanke der Impulse des ersten Systems zurückgesetzt wird, dass die Auswerteschaltung derart ausgestaltet ist, die Datenausgangssignale der Zähler in Abhängigkeit von der Geschwindigkeit eines Zuges oder der Drehzahl des Impulsgebers unterschiedlich auszuwerten, dass die Auswerteschaltung die Datenausgangssignale jedes Zählers unterhalb einer bestimmten Grenzgeschwindigkeit bzw. einer bestimmten Drehzahl mit einem ersten Wert vergleicht und bei jedem Überschreiten des ersten Wertes einen Pulsfolgefehler registriert, und dass die Auswerteschaltung die Datenausgangssignale jedes Zählers oberhalb der bestimmten Grenzgeschwindigkeit bzw. der bestimmten Drehzahl mit einem zweiten Wert vergleicht und bei jedem Überschreiten des zweiten Wertes einen Pulsfolgefehler registriert, wobei der erster Wert höher ist als der zweite.

7. Vorrichtung gemäß Patentanspruch 6, **dadurch gekennzeichnet, dass** der erste Wert gleich vier und der zweite Wert gleich eins ist.

8. Vorrichtung gemäß Patentanspruch 6, **dadurch gekennzeichnet, dass** ein dritter, ein vierter, ein fünfter und ein sechster Zähler vorgesehen sind, dass dem Dateneingang des dritten Zählers die Impulse des ersten Systems zugeführt sind, dass dem Reseteingang des dritten Zählers die Impulse des dritten Systems zugeführt sind, dass dem Dateneingang des vierten Zählers die Impulse des dritten Systems zugeführt sind, dass dem Reseteingang des vierten Zählers die Impulse des ersten Systems zugeführt sind, dass dem Dateneingang des fünften Zählers die Impulse des zweiten Systems zugeführt sind, dass dem Reseteingang des fünften Zählers die Impulse des dritten Systems zugeführt sind, dass dem Dateneingang des sechsten Zählers die Impulse des dritten Systems zugeführt sind, dass dem Reseteingang des sechsten Zählers die Impulse des zweiten Systems zugeführt sind, und dass die Auswerteschaltung zur Fehlerlokalisierung derart ausgestaltet ist, bei Auftreten von zwei Pulsfolgefehlern das an beiden Pulsfolgefehlern beteiligte, und damit fehlerhafte System zu ermitteln.

## Claims

1. Method for pulse train detection for a pulse generator with two or more systems, **characterized in that** for two systems in each case the number of edges occurring of pulses of one system is determined up to the occurrence of an edge of the pulses of the other system, and that evaluation takes place of the number of edges determined as a function of the speed of a train or the rotational speed of the pulse generator, a pulse train error being registered below a certain limit speed or a certain rotational speed if the number of edges determined is exceeded by a first value, and a pulse train error being registered above the certain limit speed or the certain rotational speed if the number determined is exceeded by a second value, the first value being higher than the second.

2. Method according to claim 1, **characterized in that** for two systems in each case determination of the number is achieved by means of two counters executed in software or hardware, one counter counting the edges of the pulses of one system and being reset at each edge of the pulses of the other system, and the other counter counting the edges of the pulses of the other system and being reset at each edge of the pulses of the first system.

3. Freely programmable gate array or processor with a special program for pulse train error detection for a pulse generator with two or more systems, which program contains instructions for executing the method according to claim 1.

4. Computer program product for pulse train error detection for a pulse generator with two or more systems containing instructions for executing the method according to claim 1.

5. Speed and distance measurement unit with at least two base computers, each base computer containing at least one processor and/or a freely programmable gate array, **characterized in that** each freely programmable gate array and/or each processor is loaded with a special program, which contains instructions for executing the method according to claim 1.

6. Device for pulse train error detection for a pulse generator with two or more systems, **characterized in that** at least two counters and one evaluation circuit are provided, that each counter has a data input, a reset input and a data output and the data output is connected to the evaluation circuit, that the pulses of the first system are supplied to the data input of the first counter, so that the first counter increments in unit steps at each edge of the pulses of the first system, that the pulses of the second system are supplied to the reset input of the first counter, so that the first counter is reset at each edge of the pulses of the second system, that the pulses of the second system are supplied to the data input of the second counter, so that the second counter increments in unit steps at each edge of the pulses of the second system, that the pulses of the first system are supplied to the reset input of the second counter, so that the second counter is reset at each edge of the pulses of the first system, that the evaluation circuit is configured in such a way as to evaluate the data output signals of the counters differently as a function of the speed of a train or the rotational speed of the pulse generator, that the evaluation circuit compares the data output signals of each counter below a certain limit speed or a certain rotational speed with a first value and registers a pulse train error each time the first value is exceeded, and that the evaluation circuit compares the data output signals of each counter above the certain limit speed or the certain rotational speed with a second value and registers a pulse train error each time the second value is exceeded, the first value being higher than the second.

7. Device according to claim 6, **characterized in that** the first value is equal to four and the second value is equal to one.

8. Device according to claim 6, **characterized in that** a third, a fourth, a fifth and a sixth counter are provided, that the pulses of the first system are supplied to the data input of the third counter, that the pulses of the third system are supplied to the reset input of the third counter, that the pulses of the third system are supplied to the data input of the fourth counter, that the pulses of the first system are supplied to the reset input of the fourth counter, that the pulses of the second system are supplied to the data input of the fifth counter, that the pulses of the third system are supplied to the reset input of the fifth counter, that the pulses of the third system are supplied to the data input of the sixth counter, that the pulses of the second system are supplied to the reset input of the sixth counter, and that the evaluation circuit for error location is so configured, in the event of two pulse train errors occurring, as to determine the system involved in both pulse train errors, and thus defective.

## Revendications

1. Procédé de détection d'erreurs de séries d'impulsions pour un générateur d'impulsions avec deux modes ou plus, **caractérisé en ce que** pour respectivement deux modes, le nombre des flancs présents provenant des impulsions de l'un des modes jusqu'à l'apparition d'un flanc provenant des impulsions de l'autre mode est déterminé, et **en ce qu'**une évaluation du nombre déterminé de flancs a lieu en fonction de la vitesse d'un train ou de la vitesse de rotation du générateur d'impulsions, dans lequel au-dessous d'une vitesse limite donnée ou d'une vitesse de rotation donnée, lorsque le nombre déterminé de flancs est dépassé d'une première valeur, une erreur de série d'impulsions est enregistrée, et au-dessus d'une vitesse limite donnée ou d'une vitesse de rotation donnée, lorsque le nombre déterminé de flancs est dépassé d'une deuxième valeur, une erreur de série d'impulsions est enregistrée, dans lequel la première valeur est supérieure à la deuxième.

2. Procédé selon la revendication 1, **caractérisé en ce que** pour respectivement deux modes, la détermination du nombre a lieu au moyen de deux compteurs réalisés sous forme logicielle ou matérielle, dans lequel l'un des compteurs compte les flancs provenant des impulsions de l'un des modes et est remis à zéro à chaque flanc provenant des impulsions de l'autre mode, et l'autre compteur compte les flancs provenant des impulsions de l'autre mode et est remis à zéro à chaque flanc provenant des impulsions du premier mode.

3. Réseau de portes programmable ou processeur avec un programme spécifique de détection d'erreurs de séries d'impulsions pour un générateur d'impulsions avec deux modes ou plus, comprenant des instructions pour l'exécution du procédé selon la revendication 1.

4. Progiciel informatique de détection d'erreurs de séries d'impulsions pour un générateur d'impulsions avec deux modes ou plus, comprenant des instructions pour l'exécution du procédé selon la revendication 1.

5. Unité de mesure de vitesse et de déplacement avec au moins deux ordinateurs de base, chaque ordinateur de base comprenant au moins un processeur et/ou un réseau de portes programmable, **caractérisée en ce que** dans chaque réseau de portes programmable et/ou chaque processeur est chargé un programme spécifique qui comporte des instructions pour l'exécution du procédé selon la revendication 1.

6. Dispositif de détection d'erreurs de séries d'impulsions pour un générateur d'impulsions avec deux modes ou plus, **caractérisé en ce qu'**au moins deux compteurs et un circuit d'évaluation sont prévus, **en ce que** chaque compteur présente une entrée de données, une entrée de réinitialisation et une sortie de données et est relié au circuit d'évaluation par la sortie de données, **en ce que** les impulsions du premier mode sont amenées à l'entrée de données du premier compteur, de sorte que le premier compteur est incrémenté d'une unité à chaque flanc provenant des impulsions du premier mode, **en ce que** les impulsions du deuxième mode sont amenées à l'entrée de réinitialisation du premier compteur, de sorte que le premier compteur est remis à zéro à chaque flanc provenant des impulsions du deuxième mode, **en ce que** les impulsions du deuxième mode sont amenées à l'entrée de données du deuxième compteur, de sorte que le deuxième compteur est incrémenté d'une unité à chaque flanc provenant des impulsions du deuxième mode, **en ce que** les impulsions du premier mode sont amenées à l'entrée de réinitialisation du deuxième compteur, de sorte que le deuxième compteur est remis à zéro à chaque flanc provenant des impulsions du premier mode, **en ce que** le circuit d'évaluation est configuré de façon à évaluer différemment les signaux de sortie de données des compteurs en fonction de la vitesse d'un train ou de la vitesse de rotation d'un générateur d'impulsions, **en ce que** le circuit d'évaluation compare les signaux de sortie de données de chaque compteur au-dessous d'une vitesse limite donnée ou d'une vitesse de rotation donnée à une première valeur et enregistre une erreur de série d'impulsions à chaque dépassement de la première valeur, et **en ce que** le circuit d'évaluation compare les signaux de sortie de données de chaque compteur au-dessus d'une vitesse limite donnée ou d'une vitesse de rotation donnée à une deuxième valeur et enregistre une erreur de série d'impulsions à chaque dépassement de la deuxième valeur, la première valeur étant supérieure à la deuxième.

7. Dispositif selon la revendication 6, **caractérisé en ce que** la première valeur est égale à quatre et la deuxième valeur est égale à un.

8. Dispositif selon la revendication 6, **caractérisé en ce qu'**un troisième, un quatrième, un cinquième et un sixième compteur sont prévus, **en ce que** les impulsions du premier mode sont amenées à l'entrée de données du troisième compteur, **en ce que** les impulsions du troisième mode sont amenées à l'entrée de réinitialisation du troisième compteur, **en ce que** les impulsions du troisième mode sont amenées à l'entrée de données du quatrième compteur, **en ce que** les impulsions du premier mode sont amenées à l'entrée de réinitialisation du quatrième compteur, **en ce que** les impulsions du deuxième mode sont amenées à l'entrée de données du cinquième compteur, **en ce que** les impulsions du troisième mode sont amenées à l'entrée de réinitialisation du cinquième compteur, **en ce que** les impulsions du troisième mode sont amenées à l'entrée de données du sixième compteur, **en ce que** les impulsions du deuxième mode sont amenées à l'entrée de réinitialisation du sixième compteur, et **en ce que** le circuit d'évaluation pour la localisation des erreurs est configuré de façon à déterminer, en cas d'apparition de deux erreurs de séries d'impulsions, le mode impliqué dans les deux erreurs de séries d'impulsions et donc défectueux.
